Europäisches Patentamt

European Patent Office

Office européen des brevets

(11) Publication number: **0 078 552**
A2

(12) **EUROPEAN PATENT APPLICATION**

(21) Application number: 82110349.6

(22) Date of filing: 08.06.82

(51) Int. Cl.³: **B 05 D 1/26,** G 11 B 5/84,
B 29 F 3/04

(30) Priority: 29.10.81 US 316367

(43) Date of publication of application: 11.05.83
Bulletin 83/19

(84) Designated Contracting States: DE FR GB

(60) Publication number of the earlier application in
accordance with Art. 76 EPC:

(71) Applicant: International Business Machines Corporation,
Armonk, N.Y. 10504 (US)

(72) Inventor: Pipkin, David John, 3106 Colgate Drive,
Longmont Colorado 80501 (US)

(74) Representative: Petersen, Richard Courtenay, IBM
United Kingdom Patent Operations Hursley Park,
Winchester Hants. SO21 2JN (GB)

(54) Web coating apparatus and method.

(57) A wide travelling web is coated on one side thereof by passing the web through an elongated web coating nip in contact with an elongated pool of non-Newtonian coating liquid. The pool is replenished by a conduit manifold having one inlet conduit (34) and four outlet ports (46, 47, 48, 49). The outlet ports communicate directly with the pool. The inlet conduit divides into two branch conduits (40, 41) of equal, uniform cross section, one-half that of the inlet conduit, and of equal length. Each branch conduit divides into two branch conduits, each leading to an outlet port. The four branch conduits (42, 43, 44, 45) are of equal, uniform cross section, one half that of each of the two branch conduits, and of equal length. Each of four liquid flow paths through the branch conduits subjects the coating liquid to substantially identical flow rheology because the paths are of substantially equal length and substantially equal fluid shear characteristic.

BO9-81-025B                    1

## WEB COATING APPARATUS AND METHOD

This invention relates to web coating apparatus and methods.

The invention has particular application to coating a moving web with a non-Newtonian coating liquid by passing the web into contact with a pool of such liquid, such that a portion of the pool is carried away as a thin coating on at least one side of the web.

Such coating has particular utility in the manufacture of flexible magnetic recording tape. In such a manufacturing process, the substrate may comprise a wide web of biaxially oriented polyethylene terephthalate, acetates, polyolefins, or other conventional polymeric films which are approximately 0.0381mm (0.0015 inch) thick, and are from 304.8mm (12 inches) to 1219.2mm (48 inches) in width. The "magnetic ink" to be coated onto at least one side of such a substrate web may vary widely in formulation. However, in all known instances, this ink is a non-Newtonian liquid whose viscosity changes with shear rate. Such liquids have also been described as thixotropic and pseudoplastic fluids.

It is known that the thickness at which such liquids are coated onto such a web is dependent upon the viscosity of the liquid.

A great number of means and apparatus exist which operate to coat such liquids onto a moving web. For example, an excess amount of liquid may be applied, with excess liquid thereafter being removed by operation of a doctor knife. Also, a roller may be used to conduct liquid from a pool to the passing substrate, or the liquid may be extruded in a thin layer directly onto the passing web. The substrate may be routed into a reservoir of coating liquid, either as a

2

free-running web, or while being guided by a backup roller, and air brushes or resilient wipers can be used thereafter to remove excess coating liquid from the substrate.

In all cases, the coating liquid is a consumable and must be replenished to the pool which is immediately at the substrate coating nip or interface.

The present invention seeks to provide a replenishment means whose construction and arrangement ensures that the pool is of homogenous viscosity by ensuring that all liquid entering the pool experiences identical flow history or rheology.

According to the invention, web coating apparatus including apparatus for feeding a non-Newtonian coating liquid from a liquid source through a conduit system to an elongated pool associated with an elongated web coating nip, and in which a travelling web passes through the nip in contact with the elongated pool and emerges from the nip with a thin coating of liquid on one side thereof, is characterised in that the conduit system comprises an inlet conduit from the source and branch conduits to outlet ports spaced along the pool, the branch conduits being of smaller cross-sectional area than the conduit from which they branch, corresponding branch conduits being of substantially equal length and fluid shear characteristic, whereby each path from the inlet conduit to an individual port is of substantially equal length and fluid shear characteristic.

Thus, in use, all liquid reaching the pool has passed through substantially identical length flow paths of substantially identical shear characteristic.

In one embodiment of the invention, a magnetic ink coating apparatus includes a 609.6mm (two-foot) long pool supplied from four equally spaced and equal size outlet ports, which receive their individual ink supplies from a single inlet port. From the inlet port a first conduit of uniform cross section extends towards the four outlet ports. This first conduit divides into two branch conduits of equal, uniform cross section, the cross section being one-half that of the first conduit. These two branch conduits extend equal distances before each divides into two branch conduits, for a total of four branch conduits which connect to the four outlet ports. In order to give equal flow rheology to all four liquid streams, these four branch conduits are of equal, uniform cross section (one-half that of the individual branch conduit) and are of equal length.

US-A-4,038,442 deals with the coating of thixotropic liquids and shows the failure of the prior art to solve the problem of coating with different viscosity due to different flow history.

The scope of the invention is defined by the appended claims; and how it can be carried into effect is hereinafter particularly described with reference to the accompanying drawings, in which :-

FIGURE 1 is a simplified side view of a web coating apparatus according to the invention, incorporating non-Newtonian liquid feeding apparatus;

FIGURE 2 shows the coating nip and location of the pool of coating liquid within the apparatus of Fig.1; and

FIGURE 3 is a schematic sectional view of the conduit system which replenishes the pool of Fig.2 with coating liquid.

4

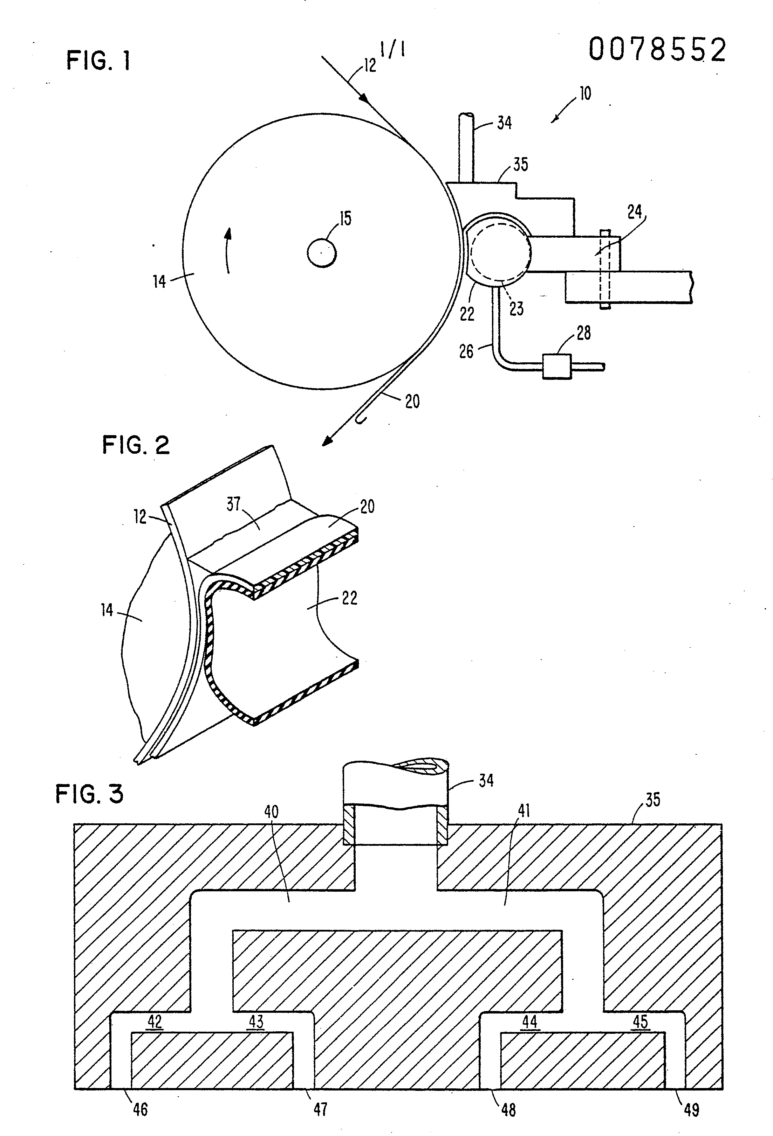

The present invention will be described in a preferred application in web coating apparatus (Fig.1) such as is described in EP-0003790, from which further details may be obtained.

In the coating apparatus 10, a travelling web 12 is engaged around a backup roller 14, which is mounted for rotation about an axis 15, and is driven at a circumferential speed equal to the linear speed at which the web 12 is moving. The roller 14, for example, a circular cylinder, 152.4mm (6 inches) in diameter, and 349.25mm (13.75 inches) in axial length, and is made of highly polished metal. Guide rollers (not shown) direct the web 12 into contact with at least a substantial portion of the periphery of the backup roller 14.

A stationary smoothing film 20 is positioned adjacent the web 12 around the periphery of the backup roller 14. The film 20 extends over a substantial portion of the web 12 which is in contact with the backup roller 14, and extends beyond such contact. Pressure generating means in the form of a pliable membrane 22 carried on a metal mandrel 23 and secured to a support 24, urges the film 20 into contact with the web 12 with a predetermined static force which is a function of the internal pressure within the membrane 22. The membrane 22 is tubular in shape, approximately 38.1mm (1.5 inches) in diameter, somewhat longer than the film 20 is wide. The tubular axis of the membrane 22 extends parallel to the axis of the roller 14 for all positions of the membrane. Support 24 preferably allows for movement towards and away from backup roller 14 to vary the circumferential conformance length of membrane 22 to roller 14. For a fixed linear web speed, the greater the length of membrane conformance, the longer will be the coating zone, as measured in the direction of web travel, and the longer will be the residence time of the web in the coating zone.

5

A conduit 26 communicates with the interior of membrane 22 and also with pressure regulating means 28 to supply a fluid, preferably air, to the interior of membrane 22. Thus, by regulating the internal pressure of membrane 22, the pressure generating means urges smoothing film 20 into contact with web 12 at a desired static force which may be readily regulated by pressure regulating means 28.

A metering pump (not shown) provides coating liquid through an input conduit 34 to a manifold 35 feeding a reservoir or pool 37 (Fig.2) of coating liquid at the confluence of web 12 and smoothing film 20. Preferably, the metering pump is driven by a belt which is connected to roller 14. Thus, the desired amount of coating liquid is provided as a function of the speed of web movement. However, under steady state operating conditions, a constant rate of replenishment, from a fluid source, is workable.

The pool or reservoir 37 of coating liquid at the confluence of smoothing film 20 and web 12 provides a readily controllable coating on web 12 with, in essence, force generated by membrane 22 controlling the thickness of the coating, and the rate of resupply of the coating liquid controlling the width of the coating. The primary function of stationary smoothing film 20 is to provide an area of high shear force to the coating liquid. This in turn generates high hydrodynamic pressure, thus to spread and smooth the liquid coating material to a uniform thickness along the length of the web. As web 12 emerges from smoothing film 20, a coated substrate is provided with liquid coating material evenly dispersed across the face of web 12 in a smooth and reproducible manner, and without a flow of surplus coating liquid at the trailing end of smoothing film 20.

6

Uniform coating down the length of pool 37 (i.e. parallel to the axis of the roller 14 and across the length of the web 12), is dependent upon uniform viscosity down the length of the pool.

In order to achieve this uniform viscosity, the manifold 35 contains a conduit system, such as illustrated in Fig.3. The input conduit 34 branches into two identical conduits 40 and 41. Each of these two conduits branches into two identical conduits 42, 43 and 44, 45 leading to outlet ports 46, 47, 48 and 49 equally spaced down the length of pool 37. The conduits 40 and 41 are mirror images of each other, as are the conduits 42 and 43, and 44 and 45 and as is the whole conduit system.

Fig.3 is a two-dimensional view of these conduits, and for simplicity all conduits are of equal depth dimension, i.e. the direction into the figure. The width of conduits 40 and 41 are equal to each other, and the sum of these widths equals the width of conduit 34. In turn, the width of conduits 42, 43, 44 and 45 are equal to each other, the sum of any two of these widths equals the width of conduit 40 (or 41), and the sum of all four of these widths equals the width of conduit 34.

In addition, the length of conduits 40 and 41 are equal to each other, and the length of conduits 42, 43, 44 and 45 are also equal to each other.

In this manner, all coating liquid entering pool 37 does so after having experienced similar flow history.

As will be appreciated, the conduit system of Fig.3 is exemplary of the present invention, and may be varied. The essence of this conduit system is that the branching conduits, whatever their number and whatever their geometric shape, be of substantially equal length, and

7

subject their liquid flow to substantially equal fluid shear between inlet port 34 and pool 37. Stated in another way, all fluid should experience the same velocity of travel, the same mass flow rate, and the same shear rate, while travelling for the same time through the same distance. This uniform rheology ensures uniform viscosity and uniform flow at the coating nip.

In another embodiment of the present invention, conduits of progressively increasing width and of progressively decreasing depth are used. In this embodiment, as in the previously described embodiment, the total conduit cross-sectional area at any plane of the conduit manifold normal to fluid flow remains constant, as the individual conduits thereof branch from one inlet conduit to the many outlet conduits. With this arrangement, the length of the pool which is spanned by the sum of the outlet port widths may approach the length of the pool itself. For example, in an arrangement similar to that of Fig.3, the depths of conduits 42, 43, 44 and 45 are decreased at like amount for each conduit towards the ports 46, 47, 48 and 49, respectively. The widths of the conduit are correspondingly increased to maintain the cross-sectional areas. This increase in width increases the length of the pool spanned by the sum of the widths of outlet ports 46, 47, 48 and 49.

Whilst the invention has a particular and preferred application to the form of web coating apparatus, described in EP-0003790 referred to above, it is also applicable to other forms, such as described in US-A-3081191, US-A-3192895, US-A-4142010, DE-A-2756133, FR-A-2377235, GB-A-1540985, US-A-4143190 and US-A-4250211.

While the invention has been particularly shown and described with reference to preferred embodiments thereof, it will be understood by

8

those skilled in the art that various changes in form and details may be made therein without departing from the scope of the invention.

9

CLAIMS

1    Web coating apparatus including apparatus for feeding a non-Newtonian coating liquid from a liquid source through a conduit system to an elongated pool (37) associated with an elongated web coating nip, and in which a travelling web (12) passes through the nip in contact with the elongated pool (37) and emerges from the nip with a thin coating of the liquid on one side thereof, characterised in that the conduit system comprises an inlet conduit (34) from the source and branch conduits (40,41,42,43,44,45) to outlet ports (46,47,48,49) spaced along the pool, the branch conduits being of smaller cross-sectional area than the conduit from which they branch, corresponding branch conduits (40,41;42,43,44,45) being of substantially equally length and fluid shear characteristic, whereby each path from the inlet conduit to an individual port is of substantially equal length and fluid shear characteristic.

2    Apparatus according to claim 1, in which the inlet conduit (34) divides into a plurality of symmetrically disposed branch conduits (40,41), each of which divides into a plurality of symmetrically disposed branch conduits (42,43,44,45).

3    Apparatus according to claim 1 or 2, in which the utilization pool is elongated, the number of outlet ports is $2^N$ where N is an integer, and each division is into two branch conduits (40,41;42,43;44,45).

4    Apparatus according to claim 1, 2 or 3, in which each branch conduit is of uniform cross-section.

10

5    A method of coating a travelling web passing through an elongated pool (37) of non-Newtonian coating liquid, characterised by the use of apparatus according to claim 1, 2, 3 or 4, to feed liquid to the spaced outlet ports (46,47,48,49) communicating directly with the pool (37).

FIG. 1

1/1

0078552

FIG. 2

FIG. 3